# EUROPEAN PATENT SPECIFICATION

(11) **EP 4 343 931 B1**
(45) Date of publication and mention of the grant of the patent: **18.03.2026**
(21) Application number: 23151063.7
(22) Date of filing: 11.01.2023
(51) Int. Cl.: H01M 50/107, H01M 50/152, H01M 50/179, H01M 50/184, H01M 50/186, H01M 50/188, H01M 50/538, H01M 50/56

(54) **BATTERY**
BATTERIE
BATTERIE

(30) Priority: 21.09.2022 CN 202211153918
(43) Date of publication of application: 27.03.2024
(73) Proprietor: CALB Group Co., Ltd., Changzhou City, Jiangsu Province (CN)
(72) Inventor: SUN, Qianqian, Changzhou City, Jiangsu Province (CN); QI, Binwei, Luoyang City, Henan Province (CN); WANG, Yawei, Changzhou City, Jiangsu Province (CN); ZHANG, Lulu, Changzhou City, Jiangsu Province (CN)
(74) Representative: Becker, Eberhard

(56) References cited:
- EP-A1- 4 135 118
- WO-A1-2022/068449
- CN-A- 115 051 084
- US-A1- 2015 279 574

## Description

### BACKGROUND

### Technical Field

The disclosure relates to the technical field of batteries, in particular to a battery.

### Description of Related Art

In the related art, the cell of a battery is connected to a pole assembly through a current collecting plate. In order to ensure the insulation performance of the internal structure of the battery, the current collecting plate is normally set adjacent to an insulator. However, after a long time of use, the current collecting plate and the insulator are likely to deviate from their original positions, which affects the insulation performance.

Documents CN115051084A, WO2022/068449A1 and US2015/279574A1 disclose cylindrical batteries with a cap assembly.

### SUMMARY

The disclosure provides a battery, as defined in claim 1.

The disclosure provides a battery, including: a housing; a cell, which is disposed in the housing, and includes a main body and a first tab, and the first tab is led out from one end of the main body; a first insulator, which is disposed in the housing; a first current collector, which is integrally formed in the first insulator, and is connected to the first tab; the largest circumferential outer edge of the orthographic projection of the first current collector facing an end surface of the main body is located inside the largest circumferential outer edge of the orthographic projection of the first insulator facing an end surface of the main body.

The battery includes a housing, a cell, a first insulator, and a first current collector. The first tab on the main body is connected to the first current collector. By integrally forming the first current collector in the first insulator, it is possible to improve the connection strength of the first current collector and the first insulator, thereby preventing the problem of connection failure between the first current collector and the first insulator, so as to ensure the insulation protection provided by the first insulator for the first current collector.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery according to an exemplary embodiment.
FIG. 2 is a schematic diagram of an exploded structure of a battery according to an exemplary embodiment.
FIG. 3 is a schematic diagram showing an exploded structure of a first insulator, a first current collector, and a second current collector of a battery according to an exemplary embodiment.
FIG. 4 is a schematic diagram showing an exploded structure of a first insulator, a first current collector, and a second current collector of a battery according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure.

The scope of protection is defined in the appended claims.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

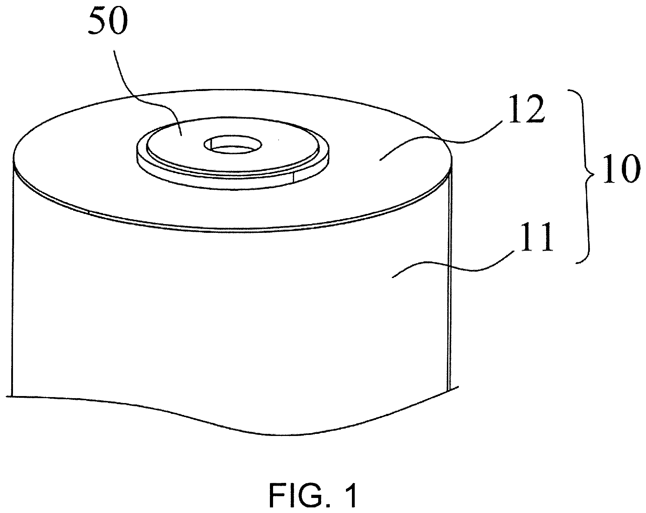

An embodiment of the present disclosure provides a battery. Please refer to FIG. 1 to FIG. 4. The battery includes: a housing 10; a cell 20, which is disposed in the housing 10, and the cell 20 includes a main body 21 and a first tab 22; the first tab 22 is led out from one end of the main body 21; a first insulator 30, which is disposed in the housing 10; a first current collector 40, which is integrally formed in the first insulator 30, the first current collector 40 is connected to the first tab 22; the largest circumferential outer edge of the orthographic projection of the first current collector 40 facing an end surface of the main body 21 is located inside the largest circumferential outer edge of the orthographic projection of the first insulator 30 facing an end surface of the main body 21.

The battery in an embodiment of the present disclosure includes a housing 10, a cell 20, a first insulator 30, and a first current collector 40. The first tab 22 on the main body 21 is connected to the first current collector 40. By integrally forming the first current collector 40 in the first insulator 30, it is possible to improve the connection strength of the first current collector 40 and the first insulator 30, thereby preventing the problem of connection failure between the first current collector 40 and the first insulator 30, so as to ensure the insulation protection provided by the first insulator 30 for the first current collector 40. Moreover, since the largest circumferential outer edge of the orthographic projection of the first current collector 40 facing an end surface of the main body 21 is located inside the largest circumferential outer edge of the orthographic projection of the first insulator 30 facing an end surface of the main body 21, it is possible to prevent the circumferential outer surface of the first current collector 40 from extending beyond the circumferential outer surface of the first insulator 30. In this manner, the insulation protection provided by the first insulator 30 for the first current collector 40 may be further improved, thereby improving the safety and operation performance of the battery.

It should be noted that the first current collector 40 is integrally formed in the first insulator 30. The first current collector 40 may be formed independently, and in the subsequent molding process of the first insulator 30, the first current collector 40 is molded in the first insulator 30, so that the first current collector 40 is integrally formed in the first insulator 30. In this manner, it is possible to improve the connection strength of the first insulator 30 and the first current collector 40, thus preventing the problem of connection failure between the first insulator 30 and the first current collector 40, so as to ensure the reliable protection provided by the first insulator 30 for the first current collector 40. Alternatively, in some embodiments, it is not excluded that the first current collector 40 may be molded inside the first insulator 30 after the molding of the first insulator 30 is completed.

The first current collector 40 is integrally formed in the first insulator 30. It can be considered that the first current collector 40 is partially formed inside the first insulator 30. In some embodiments, it is not excluded that the first current collector 40 is completely formed in the first insulator 30.

The integral formation of the first current collector 40 in the first insulator 30 may also reduce the space occupied by the first current collector 40 inside the battery. That is, the first insulator 30 and the first current collector 40 being stacked causes height accumulation of the first insulator 30 and the first current collector 40, which improves the overall space utilization of the battery while enhancing the insulation effect of the first insulator 30, so that the energy density of the battery may be improved to a certain extent.

The largest circumferential outer edge of the orthographic projection of the first current collector 40 facing the end surface of the main body 21 is located inside the largest circumferential outer edge of the orthographic projection of the first insulator 30 facing the end surface of the main body 21. The whole first current collector 40 may be located in the first insulator 30, or a part of the first current collector 40 may be located in the first insulator 30. Under the circumstances, the orthographic projection of the first current collector 40 facing the first insulator 30 should not extend beyond the first insulator 30. That is, in terms of the state of the circumferential outer surface of the first current collector 40 should not extend beyond the circumferential outer surface of the first insulator 30, so as to prevent the first current collector 40 from forming an electrical connection with a conductive structure on the circumferential outer surface of the first insulator 30, thereby ensuring that the first insulator 30 provides reliable insulation protection for the first current collector 40.

In an embodiment, the integral injection molding of the first insulator 30 and the first current collector 40 not only is able to improve the connection stability of the first insulator 30 and the first current collector 40, but also improve the assembly efficiency of the battery. The first insulator 30 may be made of plastic material, and the first current collector 40 may be made of conductive material. Further, the first current collector 40 may be made of metal material. The first current collector 40 may be aluminum, copper or aluminum-copper composite structure and so on.

The first current collector 40 may be molded independently, and after the molding is completed, the first current collector 40 may be injection molded into the first insulator 30 during the injection molding process of the first insulator 30.

In an embodiment, a part of the first current collector 40 is embedded inside the first insulator 30, and another part of the first current collector 40 is located outside the first insulator 30. Through such configuration, on basis that the connection strength of the first insulator 30 and the first current collector 40 is ensured, it is also convenient for a part of the first current collector 40 located outside the first insulator 30 to be connected with other structures, so as to improve the adaptability of the first current collector 40.

It should be noted that, a part of the first current collector 40 embedded in the first insulator 30 may be connected to the first tab 22, and a part of the first current collector 40 outside the first insulator 30 may be connected to the pole assembly or the housing. Alternatively, a part of the first current collector 40 embedded in the first insulator 30 may be connected to the pole assembly or the housing, and a part of the first current collector 40 outside the first insulator 30 may be connected to the first tab 22.

In an embodiment, the thickness of at least a part of the first current collector 40 embedded inside the first insulator 30 is smaller than the thickness of the first current collector 40 outside the first insulator 30. That is, the first current collector 40 may be a structure with nonuniform thickness. In this way, on the basis of ensuring the current-carrying capacity of the first current collector 40, the overall weight of the first current collector 40 may also be reduced, and the energy density of the battery may be improved to a certain extent. While the thickness of the first current collector 40 embedded in the first insulator 30 is relatively small, the thickness of the first insulator 30 may also be reduced as appropriate. On the basis of increasing the connection strength of the first current collector 40 and the first insulator 30, in the meantime, it is also possible to prevent the overall thickness of the first insulator 30 from increasing, thus improving the utilization of the overall internal space of the battery.

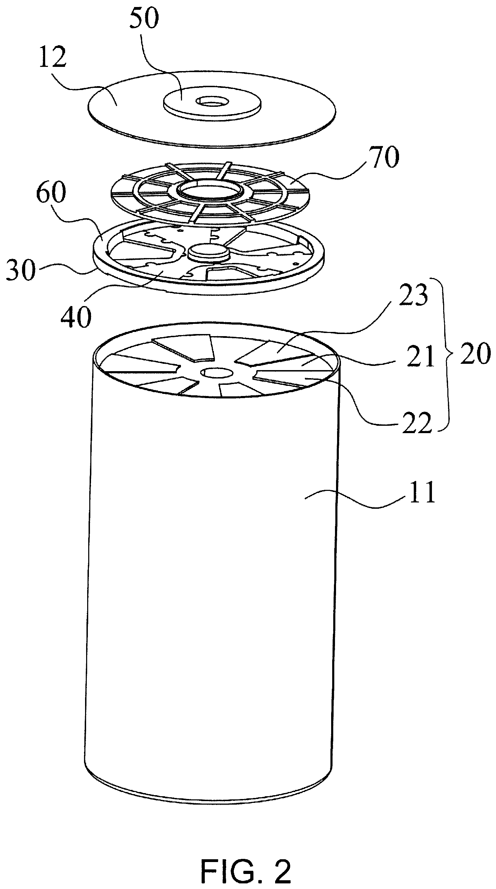

In an embodiment, as shown in FIG. 1 and FIG. 2, the battery further includes a pole assembly 50. The pole assembly 50 is disposed on the housing 10, and the first current collector 40 includes a tab connection portion 41 and a pole connection portion 42. The pole connection portion 42 is disposed on the tab connection portion 41, and the tab connection portion 41 is embedded in the first insulator 30 to be connected to the first tab 22. At least part of the pole connection portion 42 is located outside the first insulator 30, and faces the pole assembly 50 so as to be connected with the pole assembly 50, so that the pole assembly 50 may be used as an electrode lead-out end of the battery. The pole connection portion 42 located outside the first insulator 30 may also be easily connected to the pole assembly 50, so as to improve the assembly efficiency of the battery and facilitate the assembly of the battery.

The first tab 22 may be abutted on the tab connection portion 41, and the first tab 22 may be welded to the tab connection portion 41. The pole connection portion 42 may abut against the pole assembly 50, and the pole connection portion 42 may be welded with the pole assembly 50, or the pole connection portion 42 may be riveted with the pole assembly 50, so as to ensure that the current-carrying capacity between the first tab 22 and the tab connection portion 41 and the current-carrying capacity between the pole connecting portion 42 and the pole assembly 50 are basically balanced.

It should be noted that the pole assembly 50 may be insulated from the housing 10. For example, an insulating structure may be provided between the pole assembly 50 and the housing 10, or an electrical connection may be formed between the pole assembly 50 and the housing 10. On the basis of ensuring the insulation between the positive electrode lead-out end and the negative electrode lead-out end of the battery, the connection mode between the pole assembly 50 and the housing 10 may be selected according to actual needs, which is not limited here.

In an embodiment, as shown in FIG. 2, the battery further includes a second insulator 70, and the second insulator 70 is disposed in the housing 10 and is located between the housing 10 and the first current collector 40, so that the housing 10 and the first current collector 40 are insulated from each other. In this manner, it is possible to prevent the housing 10 from being electrically connected to the pole assembly 50 through the first current collector 40, thereby ensuring reliable insulation between the housing 10 and the first current collector 40, so as to improve safety performance of the battery.

The second insulator 70 may be a plastic structure, or, the second insulator 70 may be a rubber structure, or, the second insulator 70 may include a metal structure, and the outer surface of the metal structure may be coated with an insulating layer, which may be aluminum oxide (Al₂O₃), zirconia (ZrO₂) and other ceramic materials.

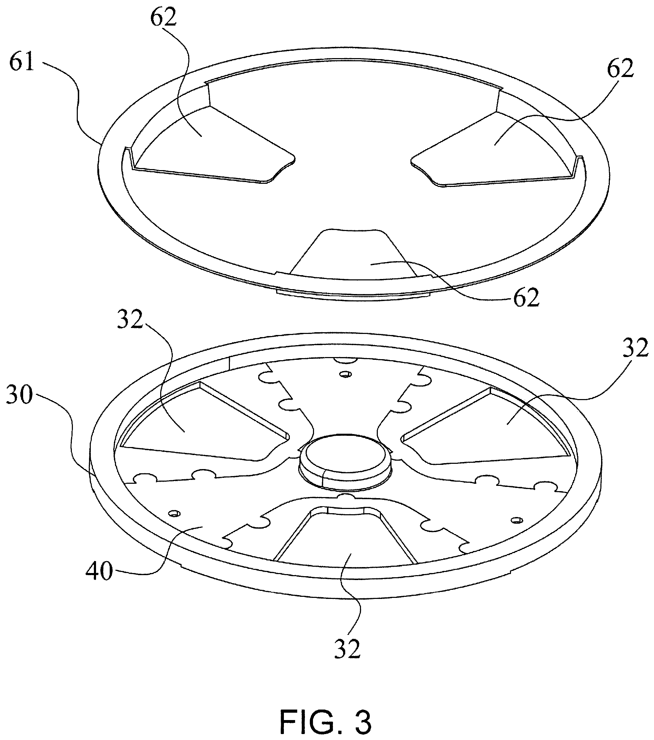

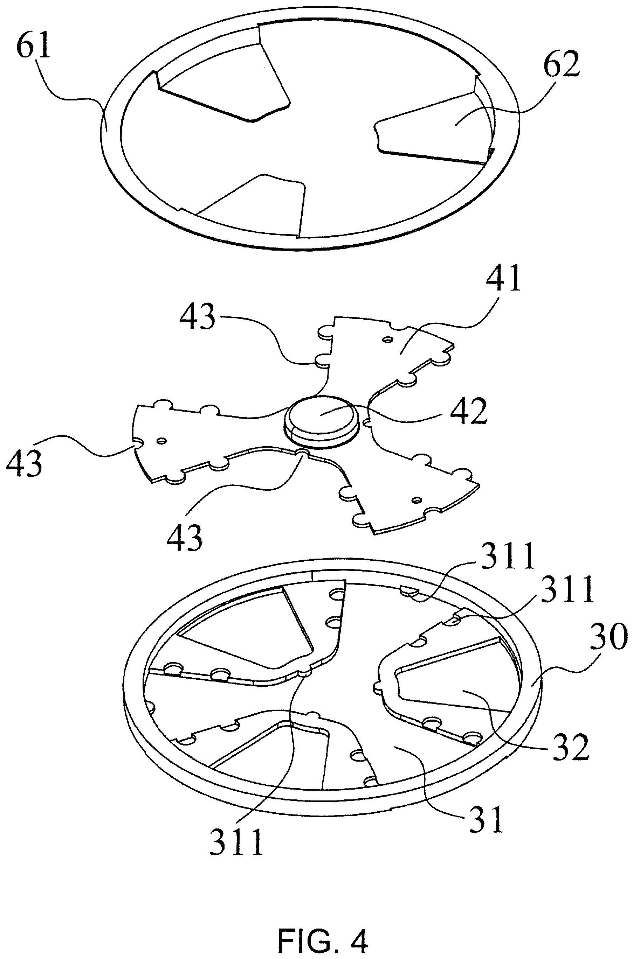

In an embodiment, as shown in FIG. 3 and FIG. 4, a first through hole 31 is formed inside the first insulator 30, and the first current collector 40 is located in the first through hole 31, so that the first current collector 40 is reliably molded inside the first insulator 30, so as to improve the connection strength of the first current collector 40 and the first insulator 30, and avoid the problem of connection failure between the first current collector 40 and the first insulator 30, thereby improving the insulation protection capability provided by the first insulator 30 for the first current collector 40.

As shown in FIG. 4, the first current collector 40 includes a tab connection portion 41 and a pole connection portion 42, and the pole connection portion 42 may be substantially cylindrical, so as to facilitate the connection between the pole connection portion 42 and the pole assembly 50. The tab connection portion 41 may include a plurality of connection sheets connected in the circumferential direction of the pole connection portion 42, so as to ensure a reliable connection area between the tab connection portion 41 and the first tab 22, thereby ensuring the current-carrying capacity of the connection portion 41 and the first tab 22. Correspondingly, the first through hole 31 may completely accommodate the tab connection portion 41, so as to ensure the connection strength between the first insulator 30 and the first current collector 40.

In an embodiment, as shown in FIG. 4, a first position-limiting portion 311 is provided on the side wall of the first through hole 31, and a second position-limiting portion 43 is provided on the circumferential outer side of the first current collector 40. One of the first position-limiting portion 311 and the second position-limiting portion 43 is a protrusion, and the other is an accommodation space, and the protrusion is located in the accommodation space, so that the connection strength between the first insulator 30 and the first current collector 40 may be further improved. Moreover, during the integral molding process of the first current collector 40 on the first insulator 30, the second position-limiting portion 43 of the first current collector 40 may also be used as a positioning structure for performing reliable molding connection with the first insulator 30.

In an embodiment, as shown in FIG. 4, a plurality of first position-limiting portions 311 are provided on the side wall of the first through hole 31, and a plurality of second position-limiting portions 43 are provided on the circumferential outer side of the first current collector 40. The structures of the plurality of first position-limiting portions 311 may be consistent, or the structures of the plurality of first position-limiting portions 311 may not be consistent. For example, a part of the plurality of first position-limiting portions 311 may be a protrusion, while the other part may be an accommodation space. Correspondingly, the structures of the plurality of second position-limiting portions 43 may be consistent, or the structures of the plurality of second position-limiting portions 43 may not be consistent. For example, a part of the plurality of second position-limiting portions 43 may be an accommodation space, while the other part may be a protrusion.

The protrusion may be in the form of a circular arc structure, the accommodation space may be an arc-shaped notch, and the arc-shaped notch may pass through the first insulator 30 or the first current collector 40, or the accommodation space may be an arc-shaped groove. The specific structural forms of the protrusion and the accommodation space are not limited here.

In an embodiment, as shown in FIG. 2, the cell 20 further includes a second tab 23, the first tab 22 and the second tab 23 are led out from the same end of the main body 21. The battery further includes a second current collector 60, and the second current collector 60 connects the second tab 23 and the housing 10; the first current collector 40 and the second current collector 60 are insulated from each other. The first tab 22 and the second tab 23 are led out from the same end of the main body 21, which may improve the utilization of the overall space inside the battery, and the housing 10 may be used as an electrode lead-out end of the battery, which may facilitate the connection of batteries when they are assembled subsequently. Moreover, the housing 10 has a relatively large area, which may ensure a reliable current-carrying area when the batteries are assembled together, so as to ensure the overall charge and discharge rate of the batteries. The polarities of the first tab 22 and the second tab 23 are opposite.

It should be noted that the first tab 22 may be electrically connected to the pole assembly 50, and the second tab 23 may be electrically connected to the housing 10. Under the circumstances, the pole assembly 50 and the housing 10 may be used as two electrode led-out ends of the battery. The pole assembly 50 and the housing 10 allow the two electrode led-out ends of the battery to be located on the same side of the battery, so as to facilitate the connection of the batteries assembled subsequently. Alternatively, the housing 10 may include a first housing member 11 and a second housing member 12, and the first housing member 11 and the second housing member 12 may be connected in an insulating manner. The first tab 22 and the second tab 23 may be electrically connected with the first housing member 11 and the second housing member 12 respectively. When the first housing member 11 and the second housing member 12 are distributed at the top and bottom, the first tab 22 and the second tab 23 may extend out from two opposite ends of the main body 21. When the first housing member 11 and the second housing member 12 are distributed on the left and right, the first tab 22 and the second tab 23 may be led out from the same end of the main body 21. Alternatively, the battery may further include another pole assembly, and the first tab 22 and the second tab 23 may be respectively connected to two pole assemblies, and the two pole assemblies may be connected to the same side of the housing 10. The first tab 22 and the second tab 23 may be led out from the same end of the main body 21, the two pole assemblies may be connected to two opposite sides of the housing 10, and the first tab 22 and the second tab 23 may extend out from two opposite ends of the main body 21.

In an embodiment, at least part of the second current collector 60 is located inside the first insulator 30. Through such configuration, on the basis of ensuring the connection strength between the second current collector 60 and the first insulator 30, it is possible to reduce the height space accumulation of the second current collector 60 and the first insulator 30, thus improving the utilization of space of the battery.

It should be noted that the second current collector 60 is detachably connected to the first insulator 30, or, the second current collector 60 may be non-detachably connected with the first insulator 30. For example, it is not excluded that the second current collector 60 may also be integrally formed in the first insulator 30.

In an embodiment, as shown in FIG. 3 and FIG. 4, a second through hole 32 is formed inside the first insulator 30, and a part of the second current collector 60 is located in the second through hole 32. On the basis of improving the integration capability of the first insulator 30 and the second current collector 60, the space utilization inside the battery may be improved, and the connection strength between the first insulator 30 and the second current collector 60 may be ensured, so that the first insulator 30 may reliably isolate the first current collector 40 from the second current collector 60 and ensure reliable insulation between the first current collector 40 and the second current collector 60.

In an embodiment, as shown in FIG. 4, the second current collector 60 includes a housing connection portion 61 and a cantilever portion 62. The cantilever portion 62 is connected to the inner side of the housing connection portion 61 and is located in the second through hole 32 in order to connect with the second tab 23. The housing connection portion 61 is disposed on the outside of the first insulator 30, and is disposed away from the second tab 23 in order to be connected with the housing 10. In this manner, the second tab 23 is able to be electrically connected to the housing 10 through the second current collector 60, so that the housing 10 is used as the tab led-out end of the battery. The area of the housing 10 is relatively large, so it is possible to facilitate the connection of the bus bar and the housing 10 in the subsequent battery assembling process. Moreover, the contact area between the bus bar and the housing 10 may be ensured, so as to ensure a reliable current-carrying capability between the bus bar and the housing 10.

The second current collector 60 includes a housing connection portion 61 and a cantilever portion 62. The cantilever portion 62 is connected to the inner side of the housing connection portion 61. There may be a certain buffering effect between the cantilever portion 62 and the housing connection portion 61 to improve the connection capability between the housing connection portion 61 and the cantilever portion 62, and adapt to the connection between the housing connection portion 61 and the cantilever portion 62 as well as the connection between the housing 10 and the second tab 23.

In an embodiment, as shown in FIG. 4, the housing connection portion 61 forms a circumferentially closed space, and there are a plurality of cantilever portions 62. The plurality of cantilever portions 62 are connected to the housing connection portion 61 at intervals. There are a plurality of second through holes 32, and the plurality of cantilever portions 62 are disposed in the plurality of second through holes 32, and the plurality of cantilever portions 62 may ensure a reliable contact area between the second current collector 60 and the second tab 23, so as to ensure the current-carrying capacity between the second current collector 60 and the second tab 23. The housing connection portion 61 is a circumferentially closed structure, which may also ensure the structural strength of the housing connection portion 61, and ensure that there is a reliable contact area between the second current collector 60 and the housing 10. In this manner, it is possible to ensure the current-carrying capacity between the second current collector 60 and the housing 10.

The second tab 23 may abut against the cantilever portion 62, and the second tab 23 and the cantilever portion 62 may be welded together. The housing connection portion 61 may abut against the housing 10, and the housing connection portion 61 and the housing 10 may be welded together. The second current collector 60 may be made of conductive material, further, the second current collector 60 may be made of metal material, and the second current collector 60 may be aluminum, copper or aluminum-copper composite structure, etc.

It should be noted that there may be a plurality of first tabs 22 and second tabs 23. As shown in FIG. 2, the first tabs 22 and second tabs 23 may be alternately arranged to ensure the insulation performance between the first tabs 22 and the second tabs 23. A plurality of connection sheets of the tab connection portion 41 may be connected with a plurality of first tabs 22, and a plurality of cantilever portions 62 may be connected with a plurality of second tabs 23. Alternatively, there may be one first tab 22 and one second tab 23. One of the first tab 22 and the second tab 23 is a positive tab, and the other is a negative tab.

In an embodiment, the housing 10 is provided with a liquid injection hole and an explosion-proof valve. The liquid injection hole and the explosion-proof valve may be located on the same side of the housing 10, while the pole assembly 50 and the explosion-proof valve may be located on opposite sides of the housing 10.

In an embodiment, as shown in FIG. 1 and FIG. 2, the housing 10 includes a first housing member 11 and a second housing member 12. The first housing member 11 and the second housing member 12 are connected to seal the cell 20. The first housing member 11 may be formed with an accommodation space, and the second housing member 12 may be a cover plate. Alternatively, the first housing member 11 and the second housing member 12 may both be formed with accommodation spaces.

The first housing member 11 includes steel and the second housing member 12 includes steel. Alternatively, the first housing member 11 includes aluminum and the second housing member 12 includes aluminium. The first housing member 11 may include a composite metal material, for example, the first housing member 11 may include a copper-aluminum composite material, and the second housing member 12 may include a composite metal material, for example, the second housing member 12 may include a copper-aluminum composite material.

The first housing member 11 and the second housing member 12 may be welded together, or the first housing member 11 and the second housing member 12 may be riveted together.

It should be noted that the battery includes a cell and an electrolyte, the minimum unit capable of performing electrochemical reactions such as charging/discharging. The cell refers to a unit formed by winding or laminating a stack portion including a first electrode sheet, a separator and a second electrode sheet. When the first electrode sheet is a positive electrode sheet, the second electrode sheet is a negative electrode sheet, and the polarities of the first electrode sheet and the second electrode sheet are interchangeable. The first electrode sheet and the second electrode sheet are coated with an active material.

In an embodiment, the battery may be a square battery, that is, the battery may be a quadrangular prism battery. The quadrangular prism battery mainly refers to the battery with the shape of a prism, but it is not necessarily limited that every side of the prism must be a straight line in the strict sense, and the angles between various sides do not have to be right angles, but can be circular arc transitions.

The battery is a stacked battery, which not only facilitates grouping, but also can be processed to obtain a battery with a long length. Specifically, the cell is a stacked cell, and the cell has a first electrode sheet stacked on each other, a second electrode sheet electrically opposite to the first electrode sheet, and a separator sheet arranged between the first electrode sheet and the second electrode sheet. In this way, multiple pairs of the first electrode sheet and the second electrode sheet are stacked to form a stacked cell.

Alternatively, the battery may be a wound battery, that is, the first electrode sheet, the second electrode sheet that is electrically opposite to the first electrode sheet, and the separator sheet disposed between the first electrode sheet and the second electrode sheet are wound to obtain a wound cell.

In an embodiment, the battery may be a cylindrical battery. The battery may be a wound battery, that is, the first electrode sheet, the second electrode sheet electrically opposite to the first electrode sheet, and the separator sheet arranged between the first electrode sheet and the second electrode sheet are wound to obtain a wound battery.

An embodiment of the present disclosure further provides a battery assembly, and the battery assembly includes the battery described above.

The battery assembly in an embodiment of the present disclosure includes a battery, and the battery includes a housing 10, a cell 20, a first insulator 30, and a first current collector 40. The first tab 22 on the main body 21 is connected to the first current collector 40. By integrally forming the first current collector 40 in the first insulator 30, it is possible to improve the connection strength of the first current collector 40 and the first insulator 30, thereby preventing the problem of connection failure between the first current collector 40 and the first insulator 30, so as to ensure the insulation protection provided by the first insulator 30 for the first current collector 40. Moreover, since the largest circumferential outer edge of the orthographic projection of the first current collector 40 facing an end surface of the main body 21 is located inside the largest circumferential outer edge of the orthographic projection of the first insulator 30 facing an end surface of the main body 21, it is possible to prevent the circumferential outer surface of the first current collector 40 from extending beyond the circumferential outer surface of the first insulator 30. In this manner, the insulation protection provided by the first insulator 30 for the first current collector 40 may be further improved, thereby improving the safety and operation performance of the battery assembly.

In an embodiment, the battery assembly is a battery module or a battery pack.

The battery module includes a plurality of batteries. The battery may be a square battery. The battery module may further include end plates and side plates, and the end plates and side plates are configured to fix the plurality of batteries. The battery may be a cylindrical battery, and the battery module may further include a bracket, and the battery may be fixed on the bracket.

The battery pack includes a plurality of batteries and a box body, and the box body is configured to fix the plurality of batteries.

It should be noted that the battery pack includes the battery, and there may be a plurality of batteries. The plurality of batteries may be formed into a battery module and placed in the box body. Alternatively, a plurality of batteries may be directly disposed in the box body, that is, it is not necessary to group the plurality of batteries together, and the box body may be used to fix the plurality of batteries.

The specification and embodiments are illustrative. The scope of protection is defined in the appended claims.

## Claims

1. A battery, comprising:
a housing (10);
a cell (20), which is disposed in the housing (10), and comprises a main body (21) and a first tab (22), wherein the first tab (22) is led out from one end of the main body (21);
a first insulator (30), which is disposed in the housing (10);
a first current collector (40), which is integrally formed in the first insulator (30), and is connected to the first tab (22);
wherein a largest circumferential outer edge of an orthographic projection of the first current collector (40) facing an end surface of the main body (21) is located inside a largest circumferential outer edge of an orthographic projection of the first insulator (30) facing the end surface of the main body (21),
the battery is **characterized in that**
the first insulator (30) and the first current collector (40) are integrally injection molded,
a part of the first current collector (40) is embedded inside the first insulator (30), and another part of the first current collector (40) is located outside the first insulator (30),
a thickness of at least a part of the first current collector (40) embedded inside the first insulator (30) is smaller than a thickness of the first current collector (40) outside the first insulator (30),
the cell (20) further comprises a second tab (23), the first tab (22) and the second tab (23) are led out from a same end of the main body (21), the battery further comprises a second current collector (60), and the second current collector (60) connects the second tab (23) and the housing (10);
wherein the first current collector (40) and the second current collector (60) are insulated from each other,
at least a part of the first insulator (30) is disposed between the first current collector (40) and the second current collector (60).

2. The battery according to claim 1, wherein the battery further comprises a pole assembly (50), the pole assembly (50) is disposed on the housing (10), and the first current collector (40) comprises a tab connection portion (41) and a pole connection portion (42), the pole connection portion (42) is disposed on the tab connection portion (41), and the tab connection portion (41) is embedded in the first insulator (30), at least a part of the pole connection portion (42) is located outside the first insulator (30), and faces the pole assembly (50) so as to be connected with the pole assembly (50).

3. The battery according to claim 2, wherein the battery further comprises a second insulator (70), and the second insulator (70) is disposed in the housing (10) and is located between the housing (10) and the first current collector (40), so that the housing (10) and the first current collector (40) are insulated from each other.

4. The battery according to claim 1, wherein a first through hole (31) is formed inside the first insulator (30), and the first current collector (40) is located in the first through hole (31);
wherein a first position-limiting portion (311) is provided on a side wall of the first through hole (31), and a second position-limiting portion (43) is provided on a circumferential outer side of the first current collector (40), one of the first position-limiting portion (311) and the second position-limiting portion (43) is a protrusion, and the other is an accommodation space, and the protrusion is located in the accommodation space.

5. The battery according to claim 1, wherein at least a part of the second current collector (60) is located inside the first insulator (30).

6. The battery according to claim 5, wherein a second through hole (32) is formed inside the first insulator (30), and a part of the second current collector (60) is located in the second through hole (32).

7. The battery according to any one of claims 1-4, wherein the battery is a cylindrical battery.

## Patentansprüche

1. Batterie, umfassend:
ein Gehäuse (10);
eine Zelle (20), die in dem Gehäuse (10) angeordnet ist und einen Hauptkörper (21) und eine erste Anschlusslasche (22) umfasst, wobei die erste Anschlusslasche (22) aus einem Ende des Hauptkörpers (21) herausgeführt ist;
einen ersten Isolator (30), der in dem Gehäuse (10) angeordnet ist;
einen ersten Stromsammler (40), der einstückig in dem ersten Isolator (30) ausgebildet ist und mit der ersten Anschlusslasche (22) verbunden ist;
wobei sich eine größte Umfangsaußenkante einer orthografischen Projektion des ersten Stromsammlers (40), die einer Endfläche des Hauptkörpers (21) zugewandt ist, innerhalb einer größten Umfangsaußenkante einer orthografischen Projektion des ersten Isolators (30) befindet, die der Endfläche des Hauptkörpers (21) zugewandt ist,
wobei die Batterie **dadurch gekennzeichnet ist, dass**
der erste Isolator (30) und der erste Stromsammler (40) einstückig spritzgegossen sind,
ein Teil des ersten Stromsammlers (40) innerhalb des ersten Isolators (30) eingebettet ist und sich ein anderes Teil des ersten Stromsammlers (40) außerhalb des ersten Isolators (30) befindet,
eine Dicke zumindest eines Teils des ersten Stromsammlers (40), das innerhalb des ersten Isolators (30) eingebettet ist, geringer ist als eine Dicke des ersten Stromsammlers (40) außerhalb des ersten Isolators (30),
die Zelle (20) ferner eine zweite Anschlusslasche (23) umfasst, wobei die erste Anschlusslasche (22) und die zweite Anschlusslasche (23) aus einem selben Ende des Hauptkörpers (21) herausgeführt sind, die Batterie ferner einen zweiten Stromsammler (60) umfasst und der zweite Stromsammler (60) die zweite Anschlusslasche (23) und das Gehäuse (10) verbindet;
wobei der erste Stromsammler (40) und der zweite Stromsammler (60) voneinander isoliert sind,
mindestens ein Teil des ersten Isolators (30) zwischen dem ersten Stromsammler (40) und dem zweiten Stromsammler (60) angeordnet ist.

2. Batterie nach Anspruch 1, wobei die Batterie ferner eine Polbaugruppe (50) umfasst, wobei die Polbaugruppe (50) auf dem Gehäuse (10) angeordnet ist und der erste Stromsammler (40) einen Anschlusslaschen-Verbindungsabschnitt (41) und einen Polverbindungsabschnitt (42) umfasst, wobei der Polverbindungsabschnitt (42) auf dem Anschlusslaschen-Verbindungsabschnitt (41) angeordnet ist und der Anschlusslaschen-Verbindungsabschnitt (41) in dem ersten Isolator (30) eingebettet ist, wobei sich zumindest ein Teil des Polverbindungsabschnitts (42) außerhalb des ersten Isolators (30) befindet und der Polbaugruppe (50) zugewandt ist, um mit der Polbaugruppe (50) verbunden zu werden.

3. Batterie nach Anspruch 2, wobei die Batterie ferner einen zweiten Isolator (70) umfasst und der zweite Isolator (70) in dem Gehäuse (10) angeordnet ist und sich zwischen dem Gehäuse (10) und dem ersten Stromsammler (40) befindet, so dass das Gehäuse (10) und der erste Stromsammler (40) voneinander isoliert sind.

4. Batterie nach Anspruch 1, wobei ein erstes Durchgangsloch (31) innerhalb des ersten Isolators (30) ausgebildet ist und sich der erste Stromsammler (40) in dem ersten Durchgangsloch (31) befindet;
wobei ein erster Positionsbegrenzungsabschnitt (311) an einer Seitenwand des ersten Durchgangslochs (31) bereitgestellt ist und ein zweiter Positionsbegrenzungsabschnitt (43) an einer Umfangsaußenseite des ersten Stromsammlers (40) bereitgestellt ist, wobei einer des ersten Positionsbegrenzungsabschnitts (311) und des zweiten Positionsbegrenzungsabschnitts (43) ein Vorsprung ist und der andere ein Aufnahmeraum ist, wobei sich der Vorsprung in dem Aufnahmeraum befindet.

5. Batterie nach Anspruch 1, wobei sich mindestens ein Teil des zweiten Stromsammlers (60) innerhalb des ersten Isolators (30) befindet.

6. Batterie nach Anspruch 5, wobei ein zweites Durchgangsloch (32) innerhalb des ersten Isolators (30) ausgebildet ist und sich ein Teil des zweiten Stromsammlers (60) in dem zweiten Durchgangsloch (32) befindet.

7. Batterie nach einem der Ansprüche 1-4, wobei die Batterie eine zylindrische Batterie ist.

## Revendications

1. Batterie, comprenant :
un boîtier (10) ;
une cellule (20), qui est disposée dans le boîtier (10) et comprend un corps principal (21) et une première languette (22), dans laquelle la première languette (22) est sortie d'une extrémité du corps principal (21) ;
un premier isolant (30) disposé dans le boîtier (10) ;un premier collecteur de courant (40) formé d'un seul tenant dans le premier isolant (30) et connecté à la première languette (22) ;
dans lequel le plus grand bord extérieur circonférentiel d'une projection orthographique du premier collecteur de courant (40) faisant face à une surface d'extrémité du corps principal (21) est situé à l'intérieur du plus grand bord extérieur circonférentiel d'une projection orthographique du premier isolant (30) faisant face à la surface d'extrémité du corps principal (21),
la batterie étant **caractérisée en ce que** le premier isolant (30) et le premier collecteur de courant (40) sont moulés par injection d'un seul tenant, une partie du premier collecteur de courant (40) est encastrée à l'intérieur du premier isolant (30), et une autre partie du premier collecteur de courant (40) est située à l'extérieur du premier isolant (30), l'épaisseur d'au moins une partie du premier collecteur de courant (40) intégrée à l'intérieur du premier isolant (30) est inférieure à l'épaisseur du premier collecteur de courant (40) à l'extérieur du premier isolant (30),
la cellule (20) comprend en outre une deuxième languette (23), la première languette (22) et la deuxième languette (23) sortant d'une même extrémité du corps principal (21), la batterie comprend en outre un deuxième collecteur de courant (60), et le deuxième collecteur de courant (60) relie la deuxième languette (23) et le boîtier (10) ;
dans laquelle le premier collecteur de courant (40) et le deuxième collecteur de courant (60) sont isolés l'un de l'autre, au moins une partie du premier isolant (30) est disposée entre le premier collecteur de courant (40) et le deuxième collecteur de courant (60).

2. Batterie selon la revendication 1, dans laquelle la batterie comprend en outre un ensemble de pôles (50), l'ensemble de pôles (50) est disposé sur le boîtier (10), et le premier collecteur de courant (40) comprend une partie de connexion de languette (41) et une partie de connexion de pôle (42), la partie de connexion de pôle (42) est disposée sur la partie de connexion de languette (41), et la partie de connexion de languette (41) est encastrée dans le premier isolant (30), au moins une partie de la partie de connexion de pôle (42) est située à l'extérieur du premier isolant (30) et fait face à l'ensemble de pôles (50) de manière à être connectée à l'ensemble de pôles (50).

3. Batterie selon la revendication 2, dans laquelle la batterie comprend en outre un deuxième isolant (70), et le deuxième isolant (70) est disposé dans le boîtier (10) et est situé entre le boîtier (10) et le premier collecteur de courant (40), de sorte que le boîtier (10) et le premier collecteur de courant (40) sont isolés l'un de l'autre.

4. Batterie selon la revendication 1, dans laquelle un premier trou traversant (31) est formé à l'intérieur du premier isolant (30), et le premier collecteur de courant (40) est situé dans le premier trou traversant (31) ;
dans laquelle une première partie de limitation de position (311) est prévue sur une paroi latérale du premier trou traversant (31), et une deuxième partie de limitation de position (43) est prévue sur un côté circonférentiel extérieur du premier collecteur de courant (40), l'une des premières parties de limitation de position (311) et deuxième partie de limitation de position (43) est une saillie, et l'autre est un espace de logement, et la saillie est située dans l'espace de logement.

5. Batterie selon la revendication 1, dans laquelle au moins une partie du deuxième collecteur de courant (60) est située à l'intérieur du premier isolant (30).

6. Batterie selon la revendication 5, dans laquelle un deuxième trou traversant (32) est formé à l'intérieur du premier isolant (30), et une partie du deuxième collecteur de courant (60) est située dans le deuxième trou traversant (32).

7. Batterie selon l'une quelconque des revendications 1 à 4, dans laquelle la batterie est une batterie cylindrique.
